# EUROPEAN PATENT SPECIFICATION

(11) **EP 1 184 311 B1**
(45) Date of publication and mention of the grant of the patent: **20.10.2004**
(21) Application number: 00118863.0
(22) Date of filing: 31.08.2000
(51) Int. Cl.: B65H 19/18, B29C 65/02, B32B 27/10, B29L 9/00

(54) **A method for splicing laminated material for packaging pourable food products**
Verfahren zum Verbinden von Mehrschichtmaterial zum Verpacken fliessfähiger Nahrungsmittel
Procédé de raccordement de matériaux multicouches pour emballer des produits alimentaires sous forme liquide

(43) Date of publication of application: 06.03.2002
(73) Proprietor: Tetra Laval Holdings & Finance S.A., 1009 Pully (CH)
(72) Inventor: Canti, Paolo, 41100 Modena (IT); Benedetti, Paolo, 41100 Modena (IT); Grisendi, Roberto, 41100 Modena (IT); Morselli, Gianni, 41030 Sorbara (IT); Sabbadini, Davide, 41012 Carpi (IT)
(74) Representative: Franzolin, Luigi

(56) References cited:
- EP-A- 0 264 012
- EP-A- 0 283 086
- FR-A- 1 524 159
- DATABASE WPI Section Ch, Week 198004 Derwent Publications Ltd., London, GB; Class A92, AN 1980-06225C XP002161796 & JP 54 155284 A (TOYO SEIKAN KAISHA LTD), 7 December 1979 (1979-12-07)

## Description

### TECHNICAL FIELD.

The present invention relates to a method for splicing laminated packaging material, during uninterrupted continuous production of sealed packages of pourable food products, such as milk, tomato puree, yoghurt, fruit juices, wine, tea, etc. Such laminated packaging sheet material has a multi-layered structure including a fibre-based layer made of a material such as paper, which is coated on either side with a heat-sealable plastics material such as polyethylene. When the packaging material is to be used for the aseptic packaging of pourable products such as milk treated at ultra-high temperature (UHT milk), the face of the packaging material destined to be placed in contact with the food product is also provided with a layer of barrier material, such as e.g., aluminium, which is in turn covered with a layer of plastics material such as polyethylene. Usually, a repeated pattern is provided at the outer surface of the packaging material web.

When manufacturing packages from the above-mentioned kind of packaging sheet material, it is imperative that no microorganisms are allowed to come into contact with the food product to be packaged. Therefore, the packaging material must be sterilized immediately prior to use for the manufacture of packages, and it must be retained in sterile conditions, until the package is completely sealed, thereby ensuring that the food product contained therein is free from any microorganisms which would otherwise spoil the food and/or transmit diseases to the consumer.

### BACKGROUND ART

Laminated packaging material is produced in the form of web which can be continuously fed into a package forming, filling and sealing machine. Such machines include e.g., the TBA/19® and TBA/21® filling machine, manufactured by Tetra Brik Packaging Systems, Via Delfini 1, Modena, Italy. The web is sterilized with a sterilizing agent such as e.g., hydrogen peroxide, which is thereafter removed by evaporation. The sterile packaging material is then maintained in an aseptic chamber, then longitudinally sealed to form a continuous tube, which is filled with liquid food product to be packaged. The tube is then clamped and transversely sealed at regular intervals. The median portions of the transversely sealed bands of packaging materials are cut to separate the individual packages from the continuous tube. This operation produces semi-finished pillow-shaped packages, which are mechanically folded to produce finished packages, with one of the repeated designs visible on each package. Such types of packages include e.g., parallelepiped packages known by the registered trademarks Tetra Brik Aseptic® and Tetra Brik®, and substantially parallelepiped packages with bevelled corners commonly known by the registered trademarks Tetra Prisma® and Tetra Prisma Aseptic®.

The continuous feed of the packaging material web is achieved by unwinding the web from a supply reel. The web passes through a magazine composed of a series of fixed rollers and vertically movable dancing rollers, before passing into the successive machine stations for sterilizing the packaging material web, for longitudinally sealing the edges of the packaging material web to form a continuous, longitudinally-sealed product-filled tube of packaging material, as described above. When the supply reel is almost exhausted, the trailing end of the web is clamped and cut transversely, and the leading end of a web unwound from a new, second reel is superimposed on the trailing end of the first web.

The leading end of the second web of packaging material is then spliced to the trailing end of the web from the first supply reel, e.g., by heat sealing thereto in a known manner. During the time that it takes to effect the splicing operation, the packaging machine continues to produce sealed packages uninterruptedly, by drawing the first web of packaging material from the magazine. This causes the dancing rollers to move upwardly as packaging material is used by the machine. When splicing is completed, the second web of packaging material is drawn through magazine and through the successive machine stations by the first web of packaging material. The dancing rollers return to their normal lowered position, all without interrupting the continuous production of sealed packages. An automatic splicing unit for carrying out this splicing method, is known from European Patent No. 283086. The programmable logic controller of the packaging machine is programmed such that, every time a splice is made, the package containing the spliced material is rejected. In order to guarantee safety for the consumer, several packages upstream of the splice and several packages downstream of the splice are also rejected.

While the above-mentioned splicing technique is satisfactory, it has been found to be susceptible to improvement, particularly regarding the structure of the splice itself. Present techniques entail cutting the leading end of the second web at 90 degrees to the plane of the web itself, and splicing it directly onto the trailing end of the first web. This has to be carried out at high speed, in order to enable continuous, uninterrupted operation of the packaging machine, which may be producing more than 20,000 packages per hour. However, exposed fibers at the cut end of the web pass through the sterile system of the packaging machine. Then the exposed fibers come into contact with the product in the continuous longitudinally-sealed packaging material tube, before the package containing the splice itself is rejected. There is thus a risk, albeit minimal, that dust and/or microorganisms entrapped in the exposed fibers can contaminate the product upstream of the product destined to be discarded in the packages that are rejected when making a splice.

Known from French Patent No. 1,453,997 is a technique for splicing laminated material for manufacturing recipients with a waterproof layer. The technique involves cutting the end of one layer of material with an inclined surface, prior to covering it with the waterproofing layer. The waterproofing layer covers also the inclined surface and is cut to a length extending beyond the end of the inclined surface, to define a flap that can be folded around the cut end to seal it. However, it is not possible to cut a laminated web of packaging material during continuous operation of a form, fill and seal type filling machine, with a flap of polyethylene that can be folded around a splice in order to seal the cut ends, in the manner known from French Patent No. 1,453,997.

Known from US Patent No. 3,449,186 is a technique for splicing two sections of web material together, such that each section has at least one layer of heat sealable material coated thereon. Both webs to be spliced together are pre-cut or notched. Then both webs are torn to produce wedge-shaped sections. The wedge-shaped sections are torn from sections of web, and the heat sealable portion of one section is placed on the torn portion of the other and the two sections are heat sealed together. This results in a joint of comparable thickness to that of the original web material. While this technique is suitable for use in a packaging material production plant, it is not possible to pre-cut both webs, tear wedge shaped sections from both webs, and then splice them together, in the manner known from US Patent No. 3,449,186, during continuous operation of a form, fill and seal type packaging machine. The fact that the resulting splice is of comparable thickness to the original web material would also create difficulties in detecting the splice in order to be able to reject the product-filled sealed package containing the splice. Moreover, the tearing operations would unavoidably generate a lot of dust. While this can be controlled in a packaging material production plant, any techniques generating excessive amounts of paper dust should definitely be avoided in a packaging machine.

Also known from US Patent No. 4,755,412 is a laminate made by forming a starting web with a stiffening layer and cutting away the layer in regularly spaced longitudinal zones, then dividing into packaging strips by cutting in the zones. The cuts are equally spaced and divide each zone into two edge regions with a mutual width ratio of 5:1-3:2. After reducing layer thickness a liquid-tight thermoplastics layer is extruded onto and laminated with the web to cover the whole width. Laminate thickness within the wider edge region decreases gradually to a minimum thickness which is maintained over an area of width not less than half the edge region width. One longitudinal web edge is folded through 180 degrees along the line at the centre of the min. thickness area. In this way, when a web manufactured in this manner is used to form a continuous longitudinally-sealed product-filled tube in a form, fill and seal type filling machine, the longitudinal edges can be sealed together without necessitating an additional sealing strip, and without producing a zone of increased thickness at the longitudinal sealing zone. However, also in this case, it is not possible to transversely cut the trailing end of a laminated web of packaging material during continuous operation of a form, fill and seal type filling machine, and splice to it the leading end of a new roll of packaging material, in the manner known from US Patent No. 4,755,412.

EP-A-264012 discloses a method of joining overlapping edges of a multi-layer packaging material web so as to form a packaging material tube. The packaging material includes inner and outer layers of thermoplastic material that can be heat-sealed. The method includes the step of undercutting one edge of the web so us to form an undercut surface in such a way that the inner layer of the inner edge protrudes beyond the other layers. The inner layer of the inner edge melts and flows upon heating and pressing so as to form a continuous plastic layer with the inner layer of the outer edge of the web. The undercut surface of the inner web extends obliquely apart from the inner layer of the outer edge of the web once the two edges are joined.

### OBJECTS OF THE INVENTION

Therefore, there is a need to provide an improved splice for connecting the leading end of one packaging material web, to the trailing web of another packaging material web, during continuous, uninterrupted production of sealed packages in a packaging machine of the above-mentioned type.

Accordingly, it is an aim of the invention to provide a method for splicing together first and second webs of pre-creased laminated packaging material for packaging pourable food products, during continuous, uninterrupted operation of a form, fill, seal-type packaging machine, which overcomes the problems encountered in the current methods.

Within this aim, it is an object of the invention to provide a method for splicing together first and second webs of pre-creased laminated packaging material for packaging pourable food products, which can be carried out in substantially the same time as conventional splicing methods, without requiring any elongation of the packaging material magazine.

Another object of the invention is to provide a method for splicing together first and second webs of pre-creased laminated packaging material for packaging pourable food products, which provides a structurally simple splice that is not susceptible to breakage as it passes through the magazine, sterilization stations and package forming stations of the packaging machine.

A further object of the invention is to provide a method for splicing together first and second webs of pre-creased laminated packaging material, for packaging pourable food products, which guarantees sealing of the cut fibers at the end of the packaging material that is destined to come into contact with the product to be packaged.

Another object of the invention is to provide a method for splicing together first and second webs of pre-creased laminated packaging material, for packaging pourable food products, which permits integrity and continuity of the inner layer of packaging material that is destined to come into contact with the product to be packaged.

### DISCLOSURE OF THE INVENTION.

The above-mentioned aim and objects, and others which will become apparent hereinafter are achieved by a method for splicing together first and second webs of pre-creased laminated packaging material for manufacturing sealed packages of pourable food products in a form, fill and seal type packaging machine, each web comprising at least one fiber-based layer having a first side covered by at least one first polymer layer defining an inner surface destined to come into contact with a food product to be packaged, and a second side covered by at least one second polymer layer defining an outer surface, said method comprising the steps of;
- holding an end portion of said first web, with said inner surface thereof oriented in a predetermined direction;
- undercutting an end portion of said second web to form an undercut surface,
- superimposing said undercut surface of said second web onto end portion of said first web and in contact therewith, with said outer surface of said second web in contact with said inner surface of said first web, and
- bonding said undercut surface of said second web to said end portion of said first web,
whereby to provide a splice whereat said inner surface of said first web and said inner surface of said second web together define an integral, continuous inner surface.

### BRIEF DESCRIPTION OF THE DRAWINGS

Further features and advantages of the invention will become apparent from the illustrative drawings of a preferred embodiment thereof wherein:
Figure 1 is a schematic cross sectional view, taken along the longitudinal mid-axis of two packaging material webs, spliced together with a prior art splicing technique;
Figure 2 is a schematic cross sectional view, similar to figure 1, showing two laminated packaging material webs prepared for splicing with the method according to the present invention;
Figure 3 is a schematic cross sectional view of the laminated packaging material webs of figure 2, superimposed and ready to be spliced together with the method according to the present invention, and;
Figure 4 is a schematic cross sectional view of the laminated packaging material webs of figures 2 and 3, spliced together with the method according to the present invention.

### DESCRIPTION OF THE PREFERRED EMBODIMENT

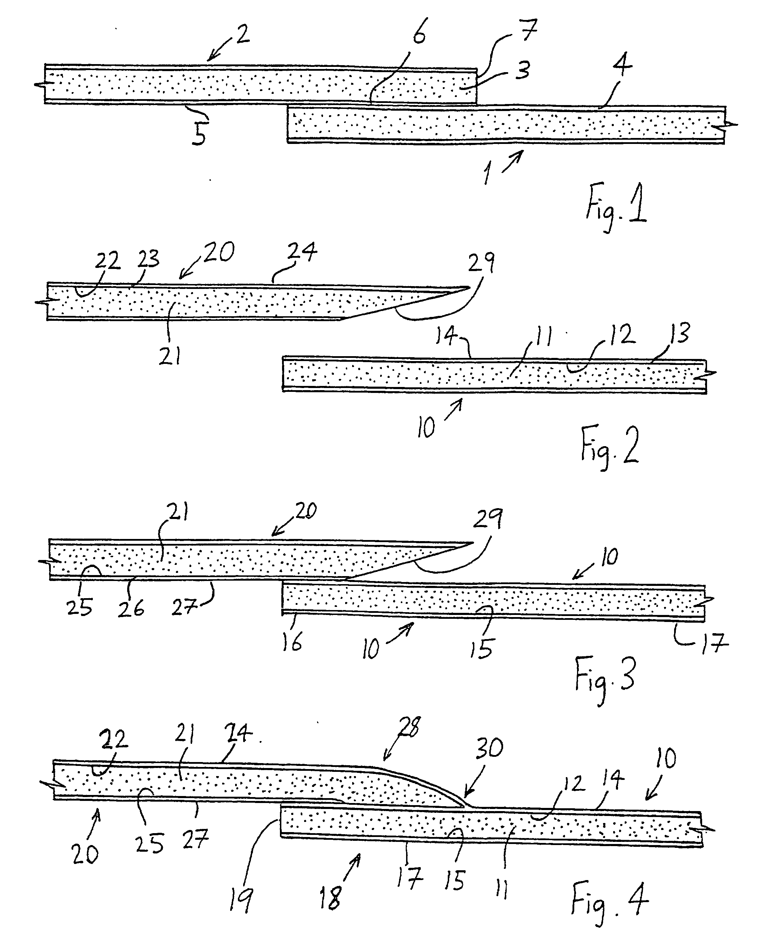

With reference to Figure 1, the reference numerals 1 and 2 indicate, respectively, the trailing end portion of a first web and the leading end portion of a second web of packaging material, which are spliced together in a conventional manner. The laminated packaging material webs 1,2 are of the type used for manufacturing sealed packages of pourable food products, such as milk, tomato puree, yoghurt, fruit juices, wine, tea, etc.

Each web 1, 2 has a multi-layered structure including a fiber-based layer 3 made of a material such as paper. The fiber-based layer 3 is covered on one side with an inner layer 4, destined to constitute the inner surface of a sealed package and to come into contact with the pourable food product to be packaged. The opposite side of the fiber-based layer is covered with an outer layer 5, which may also be constituted by a plastics material such as e.g., polyethylene. The outer layer 5 usually comprises a printed pattern, repeated along the length of the web. During manufacture of sealed packages, one of the repeated patterns is positioned on each finished package, in a known manner.

The webs 1, 2 illustrated in figure 1, are connected together at a splice 6 using a conventional technique. The inner layer 4 of heat-sealable material of the first web 1 is spliced, i.e., heat-sealed, to the outer layer 5 of heat-sealable material of the second web 2. As mentioned above, this technique has the disadvantage that an exposed end 7 of the fiber-based layer 3 is created at the splice 6 and comes into contact with the product when manufacturing packages with the spliced webs on a form, fill and seal type filling machine.

Figures 2-4 illustrate an improved method for splicing together two contiguous webs of packaging material, of the type used for manufacturing sealed packages of pourable food products in form, fill and seal type packaging machines, according to the invention.

The reference numerals 10 and 20 indicate, respectively, first and second webs of pre-creased laminated packaging material for manufacturing sealed packages of pourable food products in a form, fill and seal type packaging machine. The first web 10 comprises a fiber-based layer 11 having a first side 12 covered by a first polymer layer 13, e.g., polyethylene, defining an inner surface 14 destined to come into contact with a food product to be packaged. The fiber-based layer 11 of the first web also has a second side 15 covered by at least one second polymer layer 16, e.g., polyethylene, defining an outer surface 17.

Similarly, the second web 20 comprises a fiber-based layer 21 having a first side 22 covered by a first polymer layer 23, e.g., polyethylene, defining an inner surface 24 destined to come into contact with a food product to be packaged. The fiber based layer 21 of the second web 20 also has a second side 25 covered by at least one second polymer layer 26, e.g., polyethylene, defining an outer surface 27.

When the packaging material webs 10,20 are to be used for the aseptic packaging of pourable products such as milk treated at ultra-high temperature (UHT milk), the inner surfaces 14, 24 of each packaging material web that are destined to be placed in contact with the food product, are also provided with a layer (not illustrated) of barrier material, such as e.g., aluminium, which is in turn covered with a layer of plastics material such as polyethylene.

As illustrated in figures 2-4, the method according to the invention involves holding a trailing end portion 18 of the first web 10, with the inner surface 14 of the first web 10 oriented in a predetermined direction. This occurs, in practice, when the first web 10 is unwound from a supply reel of packaging material and fed to a form, fill and seal type packaging machine. When the supply reel is almost exhausted, the trailing end portion 18 of the first web 10 is held with known clamp means in a predetermined position, i.e., with the inner surface 14 of the trailing end portion 18 of the first web 10 facing the outer surface 27 of a leading end portion 28 the second web 20.

The leading end portion 28 of the second web 20 has to be prepared in readiness for splicing. As shown in figure 3, this is done by undercutting a leading end portion 28 of the second web to form an undercut surface 29. The cutting step is carried out in such a manner as to define an acute angle between the outer surface 24 of the second web 20 and the undercut surface 29. The acute angle defined between the outer surface 24 of the second web 20 and the undercut surface 29 is comprised between 10 degrees and 40 degrees, is preferably comprised between 15 degrees and 25 degrees, and is most preferably an angle of about 20 degrees. This cutting operation is usually carried out, in practice, prior to the splicing operation, when preparing the second web, unwound from a reserve roll of packaging material, for splicing.

Once the trailing end portion 18 of the first web 10 is held, with the inner surface 14 of the trailing end portion 18 facing the outer surface 27 of a leading end portion 28 the second web 20, and the leading end portion 28 of the second web 20 is cut to form an undercut surface 29 to define an acute angle between the outer surface 24 of the second web 20 and the undercut surface 29, the undercut surface 29 is superimposed onto the trailing end portion 18 of the first web. In this position, as illustrated in figure 3, the outer surface 27 of the second web 20 is in contact with the inner surface 14 of the first web 10.

With reference to figure 4, the next step of the method according to the invention consists in bonding the undercut surface 29 of the second web 20 to the trailing end portion 18 of the first web 10. In practice, this is done by applying heat and pressure to the trailing end portion 18 of the first web 10 and to the leading end portion 28 of the second web 20, with any suitable technique. For example, if the packaging material is of the type used for the aseptic packaging of pourable products and provided with an aluminium barrier layer (not illustrated), induction heating or impulse heating can be used. The outer surface 27 of the second web 20 upstream of the undercut surface 29 can also be sealed to the inner surface 14 of the first web 10.

As can be seen in figure 4, the above described technique produces a splice 30, whereat the thickness of the packaging material is twice the thickness of the original web i.e., the first web 10 or the second web 20. However, this is desirable in modem form, fill and seal type packaging machines, wherein the change in the thickness of the packaging material is used to detect the presence of the splice, in order to reject the affected packages.

Advantageously, in the splice 30 according to the invention, no fibers of the fiber-based layer 21,11 of either the first web 10 or the second web 20 are exposed to the product during the packaging process. This is achieved by sealing the undercut surface 29 of the second web 20 to the inner surface 14 of the first web 10. It is important to note that in this way, the inner surface 14 of the first web 10 and the inner surface 24 of the second web 20 together define an integral, continuous inner surface 14,24.

Another advantage with the method according to the present invention, is the fact that only one of the two webs to be spliced together has to be modified. This enables the first web to be used in the continuous packaging process without any interference, while only the leading end of the second web need be prepared for splicing, by simply providing the undercut 29 thereon. Only when the splice is about to be made is the first web 10 held in a predetermined position. If necessary, the trailing end 19 of the first web 10 can be cut, to provide a straight, uniform trailing end 19. However, this only needs to be done immediately prior to superimposing the undercut portion 29 of the second web 20 onto the trailing end portion 18 of said first web 10.

A further advantage, is that when this new, improved splicing technique is used in a packaging machine, it can be completed in approximately the same time as the conventional splicing techniques such as the one illustrated in figure 1. This means that the conventional packaging material magazine normally provided in a form, fill and seal type packaging machine is sufficient also when using the new splicing technique according to the invention. Therefore, the new splicing technique can be implemented on existing packaging machines with minimal modifications.

The invention as described herein may be modified without thereby departing from the purview of the appended claims.

## Claims

1. A method for splicing together first (10) and second (20) webs of pre-creased laminated packaging material for manufacturing sealed packages of pourable food products in a form, fill and seal type packaging machine, each web (10,20) comprising at least one fiber-based layer (11, 21) having a first side (12,22) covered by at least one first polymer layer (13,23) defining an inner surface (14,24) destined to come into contact with a food product to be packaged, and a second side (15,25) covered by at least one second polymer layer (16,26) defining an outer surface (17,27), said method comprising the steps of;
- holding an end portion (18) of said first web (10), with said inner surface (14) thereof oriented in a predetermined direction;
- undercutting an end portion (28) of said second web (20) to form an undercut surface (29),
- superimposing said undercut surface (29) of said second web (20) onto said end portion (18) of said first web (10) and in contact therewith, with said outer surface (27) of said second web (20) in contact with said inner surface (14) of said first web (10), and
- bonding said undercut surface (29) of said second web (20) to said end portion (18) of said first web (10),
whereby to provide a splice (30) whereat said inner surface (14) of said first web (10) and said inner surface (24) of said second web (20) together define an integral, continuous inner surface (14,24).

2. A method according to claim 1, wherein said step of holding said end portion of said first web (10) comprises holding a trailing end (18) of said first web (10), and wherein said step of undercutting an end portion (28) of said second web (20) comprises undercutting a leading end (28) of said second web (20).

3. A method according to claim 2, wherein said step of bonding at least said undercut surface (29) at said leading end (28) of said second web (20) to said trailing end (18) of said first web (10) comprises the step of applying heat and pressure to the trailing end (18) of the first web (10) and to said leading end (28) of said second web (20).

4. A method according to claim 1, wherein said step of holding an end portion (18) of said first web (10), with said inner surface (14) thereof oriented in a predetermined direction, comprises holding said first web (10) with said inner surface (14) thereof facing said outer surface (27) of said second web (20).

5. A method according to claim 1, wherein said step of undercutting an end portion (28) of said second web (20) to form an undercut surface (29), comprises cutting to define an acute angle between said outer surface (24) of said second web and said undercut surface (29).

6. A method according to claim 5, wherein said step of cutting to define an acute angle between said outer surface (24) of said second web (20) and said undercut surface (29), comprises cutting at an angle comprised between 10 degrees and 40 degrees.

7. A method according to claim 5, wherein said step of cutting to define an acute angle between said outer surface (24) of said second web (20) and said undercut surface (29), comprises cutting at an angle between 15 degrees and 25 degrees.

8. A method according to claim 5, wherein said step of cutting to define an acute angle between said outer surface (24) of said second web (20) and said undercut surface (29), comprises cutting at an angle of about 20 degrees.

9. A method according to claim 1, wherein said step of undercutting an end portion (28) of said second web (20) to form an undercut surface (29) is carried out prior to said steps of holding said end portion (18) of said first web (10), with said inner surface (14) of said first web (10) oriented in a predetermined direction.

10. A method according to claim 4, further comprising the intermediate step of cutting a trailing end (19) of said first web (10), prior to superimposing the undercut portion (29) of said second web (20) onto said trailing end portion (18) of said first web (10).

## Patentansprüche

1. Verfahren zum Verbinden von ersten (10) und zweiten (20) Geweben aus vorgefaltetem Mehrschichtverpackungsmaterial zur Herstellung versiegelter Verpackungen für schüttfähige Nahrungsmittel in einer Verpackungsmaschine zum Formen, Füllen und Versiegeln, bei dem jedes Gewebe (10, 20) wenigstens eine faserige Schicht (11, 21) aufweist, die eine erste von wenigstens einer ersten Polymerschicht (13, 23) bedeckte Seite (12, 22) hat, welche eine zum Kontakt mit einem zu verpackenden Nahrungsmittel bestimmte Innenfläche (14,24) definiert; und eine zweite von wenigstens einer zweiten Polymerschicht (16, 26) bedeckte Seite (15, 25) hat, welche eine Außenfläche (17, 27) definiert, wobei das Verfahren die folgenden Schritte beinhaltet:
- Halten eines Endabschnitts (18) des ersten Gewebes (10), wobei dessen Innenfläche (14) in eine vorbestimmte Richtung ausgerichtet wird,
- Unterschneiden eines Endabschnitts (18) des zweiten Gewebes (20) um eine Unterschneidungsfläche (29) zu bilden,
- Überlagern der Unterschneidungsfläche (29) des zweiten Gewebes (20) auf dem Endabschnitt (18) des ersten Gewebes (10) und in Kontakt dazu, wobei die Außenfläche (27) des zweiten Gewebes (20) in Kontakt mit der Innenfläche (14) des ersten Gewebes (10) ist, und
- Binden der Unterschneidungsfläche (29) des zweiten Gewebes (20) an den Endabschnitt (18) des ersten Gewebes (10),
wodurch eine Verbindungsstelle (30) entsteht, an der die Innenfläche (14) des ersten Gewebes (10) und die Innenfläche (24) des zweiten Gewebes (20) zusammen eine Einheit bildende, kontinuierliche Innenfläche (14,24) definieren.

2. Verfahren nach Anspruch 1, bei dem der Schritt des Haltens des Endabschnitts des ersten Gewebes (10) das Halten eines nachlaufenden Endes (18) des ersten Gewebes (10) beinhaltet, und bei dem der Schritt des Unterschneidens eines Endabschnittes (28) des zweiten Gewebes (20) das Unterschneiden eines vorderen Endes (28) des zweiten Gewebes (20) beinhaltet.

3. Verfahren nach Anspruch 2, bei dem der Schritt des Verbindens von wenigstens der Unterschneidungsfläche (29) an das Führungsende (28) des zweiten Gewebes (20) mit dem nachlaufenden Ende (18) des ersten Gewebes (10) den Schritt des Aufbringens von Hitze und Druck auf das nachlaufende Ende (18) des ersten Gewebes (10) und auf das Führungsende (28) des zweiten Gewebes (20) beinhaltet.

4. Verfahren nach Anspruch 1, bei dem der Schritt des Haltens eines Endabschnitts (18) des ersten Gewebes (10) mit dessen in einer vorbestimmten Richtung ausgerichteten Innenfläche (14) das Halten des ersten Gewebes (10) mit dessen der Außenfläche (27) des zweiten Gewebes (20) gegenüberliegenden Innenfläche (14) beinhaltet.

5. Verfahren nach Anspruch 1, bei dem der Schritt des Unterschneidens eines Endabschnittes (28) des zweiten Gewebes (20) zur Bildung einer Unterschneidungsfläche (29) das Schneiden beinhaltet, um einen spitzen Winkel zwischen der Außenfläche (24) des zweiten Gewebes und der Unterschneidungsfläche (29) zu definieren.

6. Ein Verfahren nach Anspruch 5, bei dem der Schritt des Schneidens zum Definieren eines spitzen Winkels zwischen der Außenfläche (24) des zweiten Gewebes (20) und der Unterschneidungsfläche (29) das Schneiden bei einem Winkel zwischen 10 Grad und 40 Grad beinhaltet.

7. Verfahren nach Anspruch 5, bei dem der Schritt des Schneidens zum Definieren eines spitzen Winkels zwischen der Außenfläche (24) des zweiten Gewebes (20) und der Unterschneidungsfläche (29) das Schneiden bei einem Winkel zwischen 15 Grad und 25 Grad beinhaltet.

8. Verfahren nach Anspruch 5, bei dem der Schritt des Schneidens zum Definieren eines spitzen Winkels zwischen der Außenfläche (24) des zweiten Gewebes (20) und der Unterschneidungsfläche (29) das Schneiden bei einem Winkel von etwa 20 Grad beinhaltet.

9. Verfahren nach Anspruch 1, bei dem der Schritt des Unterschneidens eines Endabschnitts (28) des zweiten Gewebes (20) zur Bildung einer Unterschneidungsfläche (29) vor den Schritten des Haltens des Endabschnitts (18) des ersten Gewebes (10) bei in vorbestimmter Richtung ausgerichteter Innenfläche (14) des ersten Gewebes (10) durchgeführt wird.

10. Verfahren nach Anspruch 4, das weiterhin den Zwischenschritt des Schneidens des nachlaufenden Endes (19) des ersten Gewebes (10), bevor die Unterschneidungsfläche (29) des zweiten Gewebes (20) über den nachlaufenden Endabschnitt (18) des ersten Gewebes (10) gelagert wird, beinhaltet.

## Revendications

1. Procédé pour raccorder mutuellement une première (10) et une deuxième (20) bandes de matériau d'emballage stratifié pré-plié pour la fabrication d'emballages scellés de produits alimentaires versables dans une machine d'emballage du type à formage, remplissage et soudage, chaque bande (10, 20) comprenant au moins une couche à base de fibres (11, 21) ayant un premier côté (12, 22) couvert par au moins une première couche de polymère (13, 23) définissant une surface intérieure (14, 24) destinée à venir en contact avec un produit alimentaire à emballer, et un deuxième côté (15, 25) couvert par au moins une deuxième couche de polymère (16, 26) définissant une surface extérieure (17, 27), le dit procédé comprenant les étapes de :
maintien d'une partie d'extrémité (18) de la dite première bande (10), de sorte que sa dite surface intérieure (14) soit orientée dans une direction prédéterminée ;
coupe en biseau d'une partie d'extrémité (28) de la dite deuxième bande (20) pour former une surface biseautée (29) ;
superposition de la dite surface biseautée (29) de la dite deuxième bande (20) sur la dite partie d'extrémité (18) de la dite première bande (10) et en contact avec celle-ci, la dite surface extérieure (27) de la dite deuxième bande (20) étant en contact avec la dite surface intérieure (14) de la dite première bande (10) ; et
liaison de la dite surface biseautée (29) de la dite deuxième bande (20) à la dite partie d'extrémité (18) de la dite première bande (10) ;
afin de créer un raccordement (30) à l'endroit duquel la dite surface intérieure (14) de la dite première bande (10) et la dite surface intérieure (24) de la dite deuxième bande (20) définissent ensemble une surface intérieure unitaire continue (14, 24).

2. Procédé selon la revendication 1, dans lequel la dite étape de maintien de la dite partie d'extrémité de la dite première bande (10) comprend le maintien d'une extrémité de queue (18) de la dite première bande (10), et dans lequel la dite étape de coupe en biseau d'une partie d'extrémité (28) de la dite deuxième bande (20) comprend la coupe en biseau d'une extrémité de tête (28) de la dite deuxième bande (20).

3. Procédé selon la revendication 2, dans lequel la dite étape de liaison au moins de la dite surface biseautée (29), située à la dite extrémité de tête (28) de la dite deuxième bande (20), à la dite extrémité de queue (18) de la dite première bande (10) comprend l'étape d'application de chaleur et de pression à l'extrémité de queue (18) de la première bande (10) et à la dite extrémité de tête (28) de la dite deuxième bande (20).

4. Procédé selon la revendication 1, dans lequel la dite étape de maintien d'une partie d'extrémité (18) de la dite première bande (10), dont la dite surface intérieure (14) est orientée dans une direction prédéterminée, comprend le maintien de la dite première bande (10) de sorte que sa dite surface intérieure (14) soit en face de la dite surface extérieure (27) de la dite deuxième bande (20).

5. Procédé selon la revendication 1, dans lequel la dite étape de coupe en biseau d'une partie d'extrémité (28) de la dite deuxième bande (20) pour former une surface biseautée (29) comprend une coupe définissant un angle aigu entre la dite surface extérieure (24) de la dite deuxième bande et la dite surface biseautée (29).

6. Procédé selon la revendication 5, dans lequel la dite étape de coupe pour définir un angle aigu entre la dite surface extérieure (24) de la dite deuxième bande (20) et la dite surface biseautée (29) comprend une coupe suivant un angle compris entre 10 degrés et 40 degrés.

7. Procédé selon la revendication 5, dans lequel la dite étape de coupe pour définir un angle aigu entre la dite surface extérieure (24) de la dite deuxième bande (20) et la dite surface biseautée (29) comprend une coupe suivant un angle compris entre 15 degrés et 25 degrés.

8. Procédé selon la revendication 5, dans lequel la dite étape de coupe pour définir un angle aigu entre la dite surface extérieure (24) de la dite deuxième bande (20) et la dite surface biseautée (29) comprend une coupe suivant un angle de 20 degrés environ.

9. Procédé selon la revendication 1, dans lequel la dite étape de coupe en biseau d'une partie d'extrémité (28) de la dite deuxième bande (20) pour former une surface biseautée (29) est effectuée avant les dites étapes de maintien de la dite partie d'extrémité (18) de la dite première bande (10), avec la dite surface intérieure (14) de la dite première bande (10) orientée dans une direction prédéterminée.

10. Procédé selon la revendication 4, comprenant en outre l'étape intermédiaire de coupe d'une extrémité de queue (19) de la dite première bande (10), avant la superposition de la partie biseautée (29) de la dite deuxième bande (20) sur la dite partie d'extrémité de queue (18) de la dite première bande (10).
